# DEMANDE DE BREVET EUROPEEN

(11) **EP 0 702 499 A1**
(43) Date de publication de la demande: **20.03.1996**
(21) Numéro de dépôt: 94402068.4
(22) Date de dépôt: 16.09.1994
(51) Int. Cl.: H04Q 11/04, H04L 9/00

(54) **Réseau de transmission de données pour au moins deux terminaux**

(71) Demandeur: SOCIETE D'APPLICATIONS GENERALES D'ELECTRICITE ET DE MECANIQUE SAGEM Société anonyme française, F-75783 Paris Cédex 16 (FR)
(72) Inventeur: Dumont, Denis, F-95880 Enghien (FR)
(74) Mandataire: Bloch, Gérard

(57) **Abrégé**

Réseau de transmission de données pour au moins deux terminaux (21-22) comprenant des moyens (4) agencés pour contrôler et assurer la transmission de données entre le réseau et au moins un terminal (21; 22) commandés par lesdites données, dans lequel les moyens (4) de contrôle de la transmission sont insérés en coupure sur le réseau.

## Description

Un réseau de transmission de données est en général, comme par exemple le Réseau Numérique à Intégration de Services (RNIS), accessible au public, si bien qu'il est relativement facile, de façon licite ou non, d'effectuer une copie de ces données ou même de les modifier.

Or, dans de nombreuses applications, par exemple les applications bancaires, il est primordial de pouvoir conserver la confidentialité et l'intégrité des données.

A ces fins, il est connu d'adjoindre, à un terminal de transmission de données, un dispositif de contrôle comportant des moyens de liaison entre un premier point d'accès, relié au terminal, et un second point d'accès, relié au réseau, et comportant des moyens de contrôle d'accès, reliés en entrée à l'un des points d'accès, pour contrôler les moyens de liaison en fonction des données entrant dans le dispositif par ce point d'accès.

Le dispositif de contrôle peut restreindre l'accès en entrée ou en sortie du réseau pour les terminaux qui en sont équipés, mais d'autres terminaux "externes", non équipés, peuvent, comme expliqué précédemment, recevoir les données.

Il peut alors être prévu que ces données soient embrouillées par le dispositif de contrôle, mais le risque de débrouillage par un terminal externe subsiste.

La présente invention vise à résoudre ce problème.

A cet effet, l'invention concerne un réseau de transmission de données pour au moins deux terminaux comprenant des moyens agencés pour contrôler et assurer la transmission de données entre le réseau et au moins un terminal et commandés par lesdites données, caractérisé par le fait que les moyens de contrôle de la transmission sont insérés en coupure sur le réseau.

On remarquera que le concept de l'invention va à l'encontre du préjugé de l'art antérieur, qui voulait que l'on protège les données en limitant leur réception à un destinataire spécifié par une adresse ou en empêchant leur exploitation, par l'utilisation de techniques d'embrouillage, qui, au cours du temps, sont devenues de plus en plus complexes et lourdes à mettre en oeuvre.

Au contraire, avec l'invention, on réalise un confinement physique des données sur une partie au moins du réseau, dite protégée. Comme la partie protégée du réseau peut être inaccessible physiquement à un terminal non autorisé, le confinement est ainsi beaucoup mieux assuré.

De préférence, le terminal, dont la transmission de données avec le réseau est contrôlée par lesdits moyens de contrôle, étant raccordé au réseau par une interface électrique d'un type déterminé, lesdits moyens de contrôle sont raccordés au réseau par deux interfaces électriques dudit type.

On peut ainsi placer les moyens de contrôle en coupure en tout endroit du réseau, et éventuellement modifier leur position, sans aucune modification des interfaces ni des terminaux reliés à la partie contrôlée, ou sécurisée, ni des autres, puisque les moyens de contrôle sont "transparents" pour les données qu'ils transmettent.

Avantageusement, les moyens de contrôle comportent un circuit d'authentification agencé pour associer aux données un mot de code permettant de vérifier leur intégrité.

Les données transmises ne peuvent ainsi pas être altérées sans que cela soit détecté.

Avantageusement encore, les moyens de contrôle comportent des moyens pour embrouiller des données émises par le terminal contrôlé.

L'invention sera mieux comprise à l'aide de la description suivante de la forme de réalisation préférée du réseau de transmission de données de l'invention, en référence au dessin annexé, sur lequel :
- la figure 1 est une représentation par blocs du réseau de l'invention et
- la figure 2 représente schématiquement un circuit de contrôle de la transmission de données du réseau.

Le réseau 1 de transmission de données de l'invention comporte, dans cet exemple, deux bus 2 et 3 de transmission de données entre lesquels est inséré en coupure un circuit de contrôle 4 et auxquels sont respectivement raccordés des terminaux 21-22 et 23. Le circuit de contrôle 4 contrôle et assure la transmission de données entre le réseau 1 et, ici, les deux terminaux 22-23, sous la commande des données ci-dessus.

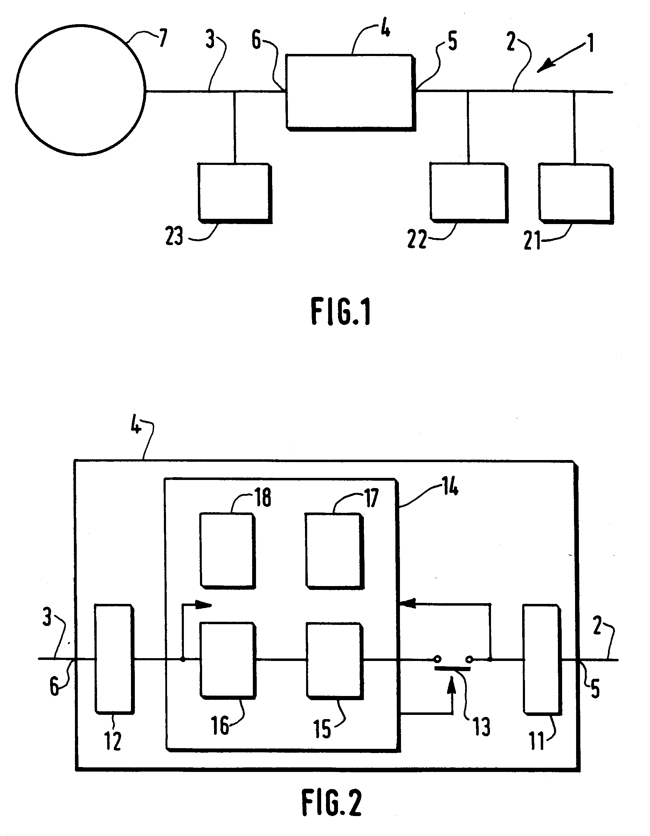

Les bus 2, 3 sont respectivement reliés à des bornes 5, 6 du circuit de contrôle 4 qui sont elles-mêmes respectivement reliées à des circuits d'interface 11, 12, représentés sur la figure 2, présentant une interface électrique conforme ici au type de l'interface S, plus précisément S0, des Avis du CCITT. Elle pourrait être aussi conforme au type de l'interface T du CCITT. De même, les terminaux 21-22 et 23 comportent des circuits d'interface, non représentés, du type S0, respectivement reliés aux bus 2 et 3, eux-mêmes prévus à cet effet.

Le bus 3 est aussi relié à un autre réseau 7, ici le Réseau Numérique à Intégration de Services (RNIS).

Dans le circuit de contrôle 4, les circuits d'interface 11, 12 sont reliés entre eux, côté interne au circuit 4, par une liaison comportant un interrupteur 13, représenté très schématiquement.

Un circuit de validation 14 est relié en entrée aux circuits d'interface 11, 12, de part et d'autre de l'interrupteur 13 et commande ce dernier.

Hormis le réseau RNIS 7 et une partie du tronçon 3, l'ensemble du réseau 1 est situé dans un local privé.

Le circuit de validation 14 comporte, dans cet exemple, un circuit d'authentification 15 et un circuit embrouilleur 16, tous deux placés en série avec l'interrupteur 13, ainsi qu'un circuit d'exploitation 17. Les circuits 15-17 utilisent en partage de temps un microprocesseur 18 du circuit de validation 14.

On comprendra que la représentation de l'interrupteur 13 et des circuits 15-18 est fonctionnelle et que les traitements, indiqués ci-après, effectués sur les bits de données sont en fait réalisés dans le microprocesseur 18, qui reçoit les bits des messages arrivant par l'un des circuits d'interface 11-12, les traite et, selon le cas, les restitue à l'autre circuit d'interface 12-11 pour remplir la fonction de l'interrupteur 13.

Le circuit d'authentification 15 est agencé pour associer, aux données émises par le terminal contrôlé 21-22 relié au bus 2, un mot de code permettant de vérifier leur intégrité, tandis que le circuit embrouilleur 16 embrouille ces mêmes données.

Le circuit d'exploitation 17 est agencé pour recevoir, du réseau, des données d'exploitation et pour commander l'interrupteur 13 en fonction de ces données d'exploitation.

Le fonctionnement du réseau 1 va maintenant être expliqué.

Lorsque le terminal 21-22 émet un message de données confidentielles, il insère dans le message un en-tête spécifique indiquant que ce message ne doit pas traverser le circuit de contrôle 4.

Le circuit de validation 14 reçoit cet en-tête à travers le circuit d'interface 11 et maintient ouvert l'interrupteur 13, ce qui empêche la transmission des données vers le tronçon 3 et le réseau RNIS 7. En l'absence d'en-tête, ou en présence d'un autre type d'en-tête autorisant le transit vers le réseau RNIS 7, les données sont transmises par l'interrupteur 13 vers le circuit d'interface 12 et le bus 3.

Le circuit d'authentification 15 reçoit les données du message à transmettre et y associe un mot de code permettant de vérifier leur intégrité, c'est-à-dire ajoute une redondance au contenu du message. Il pourrait être prévu que le terminal émetteur 21-22 émette un mot de code, indiquant son identité, qui soit vérifié par le circuit d'authentification 15, par comparaison à une table d'identités prédéterminées. De même, un transcodage du message par le terminal 21-22, tel d'addition d'un code de détection d'erreur ou un embrouillage selon des algorithmes spécifiques au terminal 21-22 considéré, permettrait au circuit d'authentification 15 de vérifier l'identité du terminal émetteur 21-22.

Le circuit embrouilleur 16 embrouille les données émises par le terminal contrôlé 21-22 vers le bus 3, à travers le bus 2, et autorise des transmissions non embrouillées sur le bus 2.

Dans un cas particulier, le terminal 23 étant alors inexistant, le réseau 1 peut comporter une pluralité de terminaux 21-22 pour lesquels la transmission de données entre le réseau 1 et tous les terminaux 21-22 est libre.

Le circuit d'exploitation 17 reçoit ici des instructions pour l'exploitation du circuit de contrôle 4, dans cet exemple à partir d'un des terminaux 21-22, c'est-à-dire que le circuit d'exploitation 17 est considéré comme étant un terminal récepteur. Les instructions d'exploitation comportent par exemple des algorithmes de codage pour les circuits 15 et 16 et des tables d'adresses pour déterminer si un message doit ou non, et sous un contrôle défini, traverser le circuit de contrôle 4 pour atteindre son destinataire.

Des moyens d'entrée/sortie indépendants des bus 2 et 3 peuvent aussi être prévus à cet effet directement au niveau du circuit de contrôle 4.

Dans cet exemple, le circuit de validation 14 étant relié en entrée aux bus 2 et 3, il présente un fonctionnement symétrique qui lui permet d'exercer un contrôle sur les données provenant du bus 2 ou 3. Le circuit de contrôle 4 peut ainsi jouer le rôle d'une clé contrôlant les accès vers les terminaux contrôlés 21-22 à partir du terminal 23 ou du réseau 7 et ainsi interdire la consultation de données contenues dans les terminaux 21-22 par des terminaux ne disposant pas d'un mot de code, ou clé, reconnu par le circuit de validation 14.

On comprendra que l'invention est aussi applicable à des réseaux de topologie différente de celle d'un bus, par exemple un réseau en boucle ou un réseau maillé.

Par ailleurs, les deux sous-réseaux (2, 3) reliés par le circuit de contrôle pourraient présenter des interfaces électriques différentes l'une de l'autre. En particulier, en partant de cet exemple, le bus 3 pourrait être une liaison à haut débit, par exemple à la norme S2 du CCITT, et le bus 2 pourrait être remplacé par une pluralité de tronçons à interface S0, le circuit de contrôle ayant alors aussi un rôle de concentrateur.

## Revendications

1. Réseau de transmission de données pour au moins deux terminaux (21-22) comprenant des moyens (4) agencés pour contrôler et assurer la transmission de données entre le réseau et au moins un terminal (21; 22) commandés par lesdites données, caractérisé par le fait que les moyens (4) de contrôle de la transmission sont insérés en coupure sur le réseau.

2. Réseau selon la revendication 1, dans lequel le terminal (21; 22), dont la transmission de données avec le réseau est contrôlée par lesdits moyens de contrôle (4), étant raccordé au réseau par une interface électrique d'un type déterminé (S0), lesdits moyens de contrôle (4) sont raccordés au réseau par deux interfaces électriques (11, 12) dudit type (S0).

3. Réseau selon l'une des revendications 1 à 2, dans lequel les moyens de contrôle (4) comportent un circuit d'authentification (15) agencé pour associer aux données un mot de code permettant de vérifier leur intégrité.

4. Réseau selon l'une des revendications 1 à 3, dans lequel lesdits moyens de contrôle (4) comportent des moyens de liaison (13) commandés par des moyens d'exploitation (17) agencés pour recevoir du réseau des données d'exploitation.

5. Réseau selon l'une des revendications 1 à 4, dans lequel les moyens de contrôle (4) comportent des moyens (16) pour embrouiller des données émises par le terminal contrôlé (21; 22).

6. Réseau selon l'une des revendications 1 à 5 pour une pluralité de terminaux (21-22) et dans lequel la transmission de données entre le réseau et tous les terminaux (21-22) est libre.
